Europäisches Patentamt

European Patent Office

Office européen des brevets

(11) Publication number: 0 216 207
B1

# (12) EUROPEAN PATENT SPECIFICATION

(45) Date of publication of patent specification: 19.12.90

(51) Int. Cl.⁵: C 08 L 55/02

(21) Application number: 86112101.0

(22) Date of filing: 01.09.86

(54) Thermoplastic resinous composition having excellent molding properties.

(30) Priority: 02.09.85 JP 193676/85

(43) Date of publication of application:
01.04.87 Bulletin 87/14

(45) Publication of the grant of the patent:
19.12.90 Bulletin 90/51

(84) Designated Contracting States:
BE DE FR GB IT NL

(56) References cited:
DE-A-3 313 385
FR-A-2 536 080

(73) Proprietor: KANEGAFUCHI KAGAKU KOGYO
KABUSHIKI KAISHA
2-4 Nakanoshima 3-chome
Kita-ku Osaka-shi Osaka-fu (JP)

(72) Inventor: Matsumoto, Shigemi
2-2-12-703, Ooakashi-cho
Akashi-shi Hyogo-ken (JP)
Inventor: Nishimoto, Kenji
2-63, Okihama-machi Takasago-cho
Takasago-shi Hyogo-ken (JP)
Inventor: Mishima, Ikuhiro
17-11, 1-chome, Nishihata
Takasago-shi Hyogo-ken (JP)
Inventor: Nagoshi, Fumiya
9-36, 9-chome, Nishimaiko
Tarumi-ku Kone-shi Hyogo-ken (JP)

(74) Representative: Vossius & Partner
Siebertstrasse 4 P.O. Box 86 07 67
D-8000 München 86 (DE)

Courier Press, Leamington Spa, England.

# EP 0 216 207 B1

**Description**

Background of the Invention

Field of the Invention

The present invention relates to a thermoplastic resinous composition having excellent thermal deformation resistance and impact resistance as well as molding properties. More particularly, it refers to a new thermoplastic resinous composition comprising an ABS resin and a copolymer in less amounts which is composed of an acrylate or methacrylate containing epoxy groups, hydroxyl groups or alkoxy group, an alkyl acrylate not containing epoxy groups, hydroxyl groups or alkoxy groups, and other copolymerizable vinyl monomers.

Description of the Prior Art

ABS resins are good materials because of their excellent mechanical properties and their economy. But they have the disadvantage that they are difficult to mold. Especially, the melt viscosity of the resin upon molding is high because of the rubber components contained therein. For this reason, undesired results such as flow marks, setting and unevenness of color of welded portions appear on the surface of the molded articles. Occasionally, a decrease in impact resistance, cracks, etc. due to molding strain takes place. In order to solve these problems, various processes have been used, for example reducing the molecular weight of the ABS resin, lowering the melt viscosity of the ABS resin by decreasing the content of rubber component, or adding large amounts of a lubricant. These processes, however, are not recommended since the former two processes deteriorate the mechanical properties of the ABS resins and the latter causes the deposition of the lubricant on the metal mold and a decrease in the thermal deformation resistance and impact resistance. From FR—A 2 536 080 there is known a resinous composition for producing mat-molded articles comprising (A) a caoutchouc-modified copolymer with (B) an olefin polymer containing epoxy groups or with the olefin polymer modified with an unsaturated carboxylic acid (B′).

The copolymer (A) can be an ABS resin and the olefin polymer (B) can be composed of units of at least one compound containing epoxy groups, units of at least one olefin and units of at least one ethylenic unsaturated compound.

Moreover, recently, there has been an increasing need for materials having a higher heat distortion temperature, particularly in the field of automobile upholstery. It is the usual practice to copolymerize alphamethylstyrene in order to improve thermal deformation resistance of ABS resins.

However, copolymerization of alphamethylstyrene increases the melt viscosity of resin even more, thus resulting in more frequent occurrence of the above-mentioned inconveniences upon molding.

Summary of the Invention

It is an object of the present invention to provide thermoplastic resinous composition which is markedly improved in molding properties and has excellent thermal deformation resistance, impact resistance and rigidity, by adding the specified modifying resin to the ABS resin.

Other objects of the present invention together with advantages thereof will be apparent from the detailed description of the invention.

The present invention relates to a thermoplastic resinous composition having excellent thermal deformation resistance and impact resistance as well as molding properties. More particularly, it refers to a new thermoplastic resinous composition comprising 100 parts by weight of an ABS resin (A) and 0.5—10 parts by weight of a copolymer (B) which is composed of 0.1—10 percent by weight of an acrylate or methacrylate containing epoxy groups, hydroxyl groups or alkoxy group, 20—99.9 percent by weight of an alkyl acrylate not containing epoxy groups hydroxyl groups or alkoxy groups, and 0—79.9 percent by weight of other copolymerizable vinyl monomers other than olefins.

The ABS resin (A) used in the present invention comprises a graft copolymer (a) obtained by polymerizing in the presence of a conjugate diene rubber two or more compounds selected from the group consisting of vinyl cyanide compounds, aromatic vinyl compounds, methacrylates and acrylates. The ABS resin (A) may further contain a copolymer (b) obtained by copolymerizing two or more compounds selected from the group consisting of vinyl cyanide compounds, aromatic vinyl compounds and methacrylates.

The proportion of the conjugate diene rubber of the graft copolymer (a) ane the foregoing compounds is not limited specifically, but 5—85 parts by weight of the conjugate diene rubber and 95—15 parts by weight of the foregoing compounds are preferred. As the proportion of the foregoing compounds, 0—40 parts by weight of the vinyl cyanide compound, 30—80 parts by weight of the aromatic vinyl compound and 0—70 parts by weight of the methacrylate and/or acrylate are preferred. The average particle size of the conjugate diene rubber is not limited specifically, but is preferably in the range of 0.05—1.5 μm.

The proportion of the foregoing compounds forming the copolymer (b) is preferably in the range of 0—35 parts by weight of the vinyl cyanide compound, 50—90 parts by weight of the aromatic vinyl compound and 0—40 parts by weight of the methacrylate and/or acrylate.

The intrinsic viscosity of the ABS resin (A) is preferably in the range of 0.25—1.2 [dl/g] (N,N′-dimethylformamide solution, 30°C) in terms of methyl ethyl ketone-soluble components of the graft copolymer (a) and the copolymer (b).

2

The conjugate diene rubber used in the present invention may include polybutadiene, butadien-styrene copolymers, butadiene-acrylonitrile copolymers, butadiene-butylacrylate copolymers, etc. The vinyl cyanide compound may include acrylonitrile, methacrylonitrile, etc. The aromatic vinyl compound may include styrene, alphamethylstyrene, vinyl toluene, methylstyrene, chlorostyrene, etc. The methacrylate and acrylate may include methyl acrylate, ethyl acrylate, butyl acrylate, methyl methacrylate, hydroxyacrylate, etc.

The graft copolymer (a) and the copolymer (b) may be prepared by emulsion polymerization, suspension polymerization solution polymerization, bulk polymerization, emulsion-suspension polymerization, bulk-suspension polymerization, etc.

The copolymer (B) which is added to improve molding properties of the foregoing ABS resin (A) is a copolymer comprising 0.1—10 percent by weight of the acrylate or methacrylate containing epoxy groups, hydroxyl groups or alkoxy groups, 20—99.9 percent by weight of the alkyl acrylate not containing epoxy groups, hydroxyl groups or alkoxy groups, and 0—79.9 percent by weight of other copolymerizable vinyl compounds.

The acrylate or methacrylate containing epoxy groups, hydroxyl groups or alkoxy groups forming the copolymer (B) may include glycidyl acrylate, glycidyl methacrylate, 2-hydroxyethyl acrylate, 2-hydroxyethyl methacrylate, 2-hydroxypropyl acrylate, 2-hydroxypropyl methacrylate, methoxyethyl acrylate, methoxyethyl methacrylate, ethoxyethyl acrylate, ethoxyethyl methacrylate, etc.

The alkyl acrylate not containing epoxy groups, hydroxyl groups or alkoxy groups forming the copolymer (B) may include ethyl acrylate, butyl acrylate, 2-ethylhexyl acrylate etc., the alkyl group of the alcohol residual group having 2—8 carbon atoms.

The other copolymerizable vinyl compound may include alkyl methacrylates such as methyl methacrylate copolymerizable with alkyl acrylates; aromatic vinyl compound such as styrene, alphamethylstyrene, methylstyrene, etc; vinyl cyanide compounds such as acrylonitrile, methacrylonitrile, etc. Those may be used singly or in combination of two or more.

The intrinsic viscosity of the copolymer (B) is preferably in a range of 1.0 or less [dl/g] (N,N'-dimethylformamide solution, 30°C), more preferably 0.5 or less [dl/g]. In the case of more than 1.0 [dl/g], the effect of improving molding properties is insufficient.

The amount of the foregoing copolymer (B) is 0.5—10 parts by weight, preferably 1—5 parts by weight based on 100 parts by weight of the ABS resin (A). When the amount is less than 0.5 part by weight, a satisfactory effect is not obtained, while, when it is more than 10 parts by weight, impact resistance, rigidity, thermal deformation resistance, etc, undesirably deteriorate.

The copolymer (B) of the present invention may be obtained easily by normal emulsion polymerization using a water-soluble initiator such as potassium persulfate, etc., or an oil-soluble initiator such as cumene hydroperoxide, etc. In the polymerization of the copolymer (B), polymerizing aromatic vinyl monomers and vinyl cyanide monomers in the presence of the copolymer (B) or conducting the polymerization of the copolymer (B) in the presence of the ABS resin (A) for freely adjusting powder properties after drying are included in the present invention, too.

As mentioned above, the present invention provides a resinous composition with markedly improved molding properties characterized in that the specified copolymer (B) is added as an essential component to the ABS resin (A), but the present composition may further contain antioxidants, heat stabilizers, lubricants, ultraviolet ray absorbers, pigments, antistatic agents, flame retardants, flame retarding assistants, fillers such as glass fibers, etc.

The resinous compositions of the present invention comprising the ABS resin (A) and the specified copolymer (B) provide molded articles superior in thermal deformation resistance, impact resistance as well as molding properties, as will be shown by examples.

Hereinbelow the present invention will be explained in more detail by way of examples to which the present invention is in no way limited.

Examples 1—5

Comparative Examples 1—4

A graft copolymer comprising 52 parts by weight of alphamethylstyrene, 10 parts by weight of styrene, 22 parts by weight of acrylonitrile and 16 parts by weight of polybutadiene, whose intrinsic viscosity of components soluble in methyl ethyl ketone is 0.60 [dl/g] was used as the ABS resin (A).

The copolymer (B) was prepared according to the following manner.

Using 2 parts by weight of sodium dioctylsulfosuccinate as an emulsifying agent, 0.4 part by weight of sodium formaldehyde sulfoxylate and 0.5 part by weight of cumene hydroperoxide as a redox type polymerization initiator and 4 parts by weight of tertiary dodecyl mercaptan as a chain transfer agent, emulsion polymerization was performed at 60°C to obtain a copolymer latex.

The monomer mixture was composed of 2 parts by weight of glycidyl methacrylate, 60 parts by weight of butyl acrylate, 25 parts by weight of styrene and 15 parts by weight of acrylonitrile. The obtained copolymer latex was salted out to give the copolymer (B)-I. The conversion was 98% and the intrinsic viscosity was 0.1 [dl/g].

Likewise, the monomer mixture composed of 1 part by weight of glycidyl methacrylate and 99 parts by weight of butyl acrylate was polymerized to obtain the copolymer (B)-II. The conversion was 98% and the intrinsic viscosity was 0.06 [dl/g].

3

The so obtained (A) and (B) were blended in such amounts as set forth in Table 1 and the blends were pelletized. Using the obtained pellets, various kinds of test samples were made according to the usual manner and their physical properties and molding properties measured. The results are shown in Table 1.

TABLE 1

| | Examples | | | | | Comparative Examples | | | |
|---|---|---|---|---|---|---|---|---|---|
| | 1 | 2 | 3 | 4 | 5 | 1 | 2 | 3 | 4 |
| ABS resin (A) (parts by weight) | 100 | 100 | 100 | 100 | 100 | 100 | 100 | 100 | 100 |
| Copolymer (B)-I (parts by weight) | 2 | 3 | 5 | 7 | | | | | |
| Copolymer (B)-II (parts by weight) | | | | | 3 | | | 15 | |
| EBS (parts by weight) | | | | | | | 2 | | |
| Stearic acid (parts by weight) | | | | | | | | | 3 |
| Heat distortion temp. (°C) | 112 | 112 | 111.5 | 110.5 | 112 | 112 | 108 | 108 | 106 |
| Izod strength (kg.cm/cm) | 17.3 | 17.1 | 17.0 | 16.8 | 17.1 | 16.0 | 16.0 | 13.1 | 15.3 |
| Tensile strength (kg/cm²) | 520 | 516 | 510 | 508 | 514 | 523 | 481 | 480 | 473 |
| Spiral flow (mm) | 595 | 635 | 675 | 740 | 665 | 510 | 535 | 795 | 540 |
| Flow mark | O | O | O | O | O | × | × | O | × |

Note:
EBS: Ethylene bisstearylamide
Heat distortion temperature: ASTM-D-648 18.6 kg/cm² load
Izod strength: ASTM-D-256 with notch, 23°C
Tensile strength: ASTM-D-636, 23°C
Spiral flow: 3-ounce injection molding machine, nozzle temperature 250°C, injection pressure 900 kg/cm², mold temperature 40°C.
Flow mark: a box-type molded article with a length of 180 mm, a width of 100 mm, a depth of 40 mm and a thickness of 3 mm was prepared by injection molding and its appearance was studied. The results are shown according to the criteria:
O .. substantially inconspicuous
△ . . . somewhat remarkable
× . . . remarkable

**Claims**

1. A thermoplastic resinous composition having excellent molding properties comprising:
(A) 100 parts by weight of an ABS resin, and
(B) 0.5—10 parts by weight of a copolymer consisting of
(a) 0.1—10 percent by weight of acrylate or methacrylate containing epoxy groups, hydroxyl groups or alkoxy groups,
(b) 20—99.9 percent by weight of an alkyl acrylate not containing epoxy groups, hydroxyl groups or alkoxy groups,
(c) 0—79.9 percent by weight of other copolymerizable vinyl compounds other than olefins said copolymer (B) having an intrinsic viscosity of 1.0 or less (dl/g in Dimethylformamide solution, 30°C).
2. The thermoplastic resinous composition of Claim 1, wherein the intrinsic viscosity of the ABS resin is in a range of 0.25—1.2 [dl/g] (N,N'-dimethyl formamide solution, 30°C) in terms of its components soluble in methyl ethyl ketone.
3. The thermoplastic resinous composition of Claim 1, wherein the intrinsic viscosity of the copolymer is 1.0 or less [dl/g] (N,N'-dimethyl formamide solution, 30°C).
4. The thermoplastic resinous composition of Claim 1, wherein the ABS resin comprises a graft copolymer obtained by polymerizing in the presence of a conjugate diene rubber two or more compounds selected from the group consisting of vinyl cyanide compounds, aromatic vinyl compounds, methacrylates and/or acrylates.
5. The thermoplastic resinous composition of Claim 4, wherein the ABS resin comprises 5—85 parts by

4

EP 0 216 207 B1

weight of the conjugate diene rubber and 95—15 parts by weight of the compounds consisting of 0—40 parts by weight of the vinyl cyanide compound, 30—80 parts by weight of the aromatic vinyl compound and 0—70 parts by weight of the methacrylate and/or acrylate.

6. The thermoplastic resinous composition of Claim 4, wherein the ABS resin further contains a copolymer obtained by polymerizing two or more compounds selected from the group consisting of vinyl cyanide compounds, aromatic vinyl compounds and methacrylates and/or acrylates.

7. The thermoplastic resinous composition of Claim 6, wherein the copolymer comprises 0—35 parts by weight of the vinyl cyanide compound, 50—90 parts by weight of the aromatic vinyl compound and 0—40 parts by weight of the methacrylate and/or acrylate.

**Patentansprüche**

1. Thermoplastische Harzzusammensetzung mit guter Formbarkeit umfassend:
(A) 100 Gew.-Teile eines ABS-Harzes und
(B) 0,5 bis 10 Gew.-Teile eines Copolymerisats, bestehend aus
(a) 0,1 bis 10 Gew.-% eines Epoxygruppen, Hydroxylgruppen oder Alkoxyreste enthaltenden Acrylats oder Methacrylats,
(b) 20 bis 99,9 Gew.-% eines keine Epoxygruppen, Hydroxylgruppen oder Alkoxyreste enthaltenden Alkylacrylats und
(c) 0 bis 79,9 Gew.-% anderer copolymerisierbare Vinylverbindungen, ausgenommen Olefinen, wobei das Copolymerisat (B) eine grundmolare Viskositätszahl von 1,0 oder weniger (dl/g in Dimethylformamidlösung, 30°C) besitzt.

2. Thermoplastische Harzzusammensetzung nach Anspruch 1, wobei die grundmolare Viskositätszahl des ABS-Harzes in Bezug auf seine in Methylethylketon löslichen Bestandteile im Bereich von 0,25 bis 1,2 (dl/g) (N,N'-Dimethylformamidlösung, 30°C) liegt.

3. Thermoplastische Harzzusammensetzung nach Anspruch 1, wobei die grundmolare Viskositätszahl des Copolymerisats 1,0 oder weniger (dl/g) (N,N'-Dimethylformamidlösung, 30°C) beträgt.

4. Thermoplastische Harzzusammensetzung nach Anspruch 1, wobei das ABS-Harz eine Pfropfcopolymerisat umfaßt, welches durch Polymerisieren zweier oder mehrerer Verbindungen der Gruppe Vinylcyanidverbindungen, aromatische Vinylverbindungen oder Methacrylate und/oder Acrylate in Gegenwart eines konjugierten Dienkautschuks erhältlich ist.

5. Thermoplastische Harzzusammensetzung nach Anspruch 4, wobei das ABS-Harz 5 bis 85 Gew.-Teile des konjugierten Dienkautschuks und 95 bis 15 Gew.-Teile einer Verbindung umfaßt, die aus 0 bis 40 Gew.-Teilen der Vinylcyanidverbindung, 30 bis 80 Gew.-Teilen der aromatischen Vinylverbindung und 0 bis 70 Gew.-Teilen des Methacrylats und/oder Acrylats besteht.

6. Thermoplastische Harzzusammensetzung nach Anspruch 4, wobei das ABS Harz weiterhin ein Copolymerisat enthält, welches durch Polymerisieren zweier oder mehrerer Verbindungen der Gruppe Vinylcyanidverbindungen, aromatische Vinylverbindungen oder Methacrylate und/oder Acrylate erhältlich ist.

7. Thermoplastische Harzzusammensetzung nach Anspruch 6, wobei das Copolymerisat 0 bis 35 Gew.-Teile der Vinylcyanidverbindung, 50 bis 90 Gew.-Teile der aromatischen Vinylverbindung und 0 bis 40 Gew.-Teile des Methacrylats und/oder Acrylats umfaßt.

**Revendications**

1. Composition de résine thermoplastique ayant d'excellentes propriétés de moulage, comprenant:
(A) 100 parties en poids d'une résine d'ABS, et
(B) 0,5 à 10 parties en poids d'un copolymère consistant en
(a) 0,1 à 10 en poids d'un acrylate ou méthacrylate contenant des groupes époxy, des groupes hydroxyle ou des groupes alcoxy,
(b) 20 à 99,9% en poids d'un acrylate d'alkyle qui ne contient pas de groupes époxy, de groupes hydroxyles ou de groupes alcoxy, et
(c) 0 à 79,9% en poids d'autres composés vinyliques copolymérisables autres que des oléfines, ledit copolymère (B) ayant une viscosité intrinsèque de 1,0 ou moins (dl/g dans une solution de diméthylformamide à 30°C).

2. Composition de résine thermoplastique selon la revendication 1, dans laquelle la viscosité intrinsèque de la résine d'ABS est comprise dans une gamme de 0,25 à 1,2 (dl/g) (solution de N,N'-diméthylformamide, 30°C) en termes de ses composants solubles dans le méthyléthylcétone.

3. Composition de résine thermoplastique selon la revendication 1, dans laquelle la viscosité intrinsèque du copolymère est égale à 1,0 ou moins (dlg/) (solution de N,N'-diméthylformamide, 30°C).

4. Composition de résine thermoplastique selon la revendication 1, dans laquelle la résine d'ABS comprend un copolymère greffé obtenu par polymérisation en présence d'un caoutchouc de diène conjugué de deux ou plus de deux composés choisis dans le groupe formé par les composés du cyanure de vinyle, les composés vinyliques aromatiques, les méthacrylates et/ou les acrylates.

5. Composition de résine thermoplastique selon la revendication 4, dans laquelle la résine d'ABS

5

comprend 5 à 85 parties en poids de caoutchouc de diène conjugué et 95 à 15 parties en poids des composés consistant en 0 à 40 parties en poids du composé de cyanure de vinyle, 30 à 80 parties en poids du composé vinylique aromatique et 0 à 70 parties en poids de méthacrylate et/ou d'acrylate.

6. Composition de résine thermoplastique selon la revendication 1, dans laquelle la résine d'ABS comprend en outre un copolymère obtenu par polymérisation de deux ou plus de deux composés choisis dans le groupe formé par les composés du cyanure de vinyle, les composés vinyliques aromatiques et les méthacrylates et/ou acrylates.

7. Composition de résine thermoplastique selon la revendication 6, dans laquelle le copolymère comprend 0 à 35 parties en poids de composé de cyanure de vinyle, 50 à 90 parties en poids de composé vinylique aromatique et 0 à 40 parties en poids de méthacrylate et/ou d'acrylate.